# EUROPÄISCHE PATENTSCHRIFT

(11) **EP 3 521 631 B1**
(45) Veröffentlichungstag und Bekanntmachung des Hinweises auf die Patenterteilung: **03.03.2021**
(21) Anmeldenummer: 19151764.8
(22) Anmeldetag: 15.01.2019
(51) Int. Cl.: F04D 29/02, F04D 29/62, F04D 13/02, F04D 13/06

(54) **PUMPENLAUFRAD, VERFAHREN ZUR HERSTELLUNG EINES PUMPENLAUFRADS UND PUMPE MIT DEM PUMPENLAUFRAD**
PUMP IMPELLER, METHOD FOR MANUFACTURING A PUMP IMPELLER AND PUMP WITH PUMP IMPELLER
ROUE MOBILE DE POMPAGE, PROCÉDÉ DE FABRICATION D'UNE ROUE MOBILE DE POMPAGE ET POMPE DOTÉE DE LA ROUE MOBILE DE POMPAGE

(30) Priorität: 06.02.2018 DE 102018201841
(43) Veröffentlichungstag der Anmeldung: 07.08.2019
(73) Patentinhaber: Bühler Motor GmbH, 90459 Nürnberg (DE)
(72) Erfinder: KRIPPNER, Sebastian, 90579 Langenzenn (DE); Bindig, Andrea, 90425 Nürnberg (DE); RAUSCH, Harald, 90766 Fürth (DE); EHRSAM, Jürgen, 90766 Fürth (DE); WEISKE, Klaus, 90571 Schwaig (DE)

(56) Entgegenhaltungen:
- EP-A1- 3 232 065
- EP-A1- 3 318 765
- US-A1- 2007 284 952

## Beschreibung

Die Erfindung betrifft ein Pumpenlaufrad nach Anspruch 1. Weiter betrifft die Erfindung ein Verfahren zur Herstellung des Pumpenlaufrads und eine Pumpe mit dem Pumpenlaufrad.

Pumpenlaufräder für Zusatzwasserpumpen im Kraftfahrzeug oder ähnliche Anwendungen werden häufig mit kunststoffgebundenen Permanentmagneten versehen. Hierbei sind sowohl einteilige als auch mehrteilige Pumpenlaufräder bekannt. Bei einteiligen Pumpenlaufrädern besteht sowohl der motorische als auch der hydraulische Teil aus Permanentmagnetmaterial. Aus wirtschaftlichen Gründen soll möglichst wenig Permanentmagnetmaterial verwendet werden, so dass es bevorzugt wird nur dort Permanentmagnetmaterial zu verwenden, wo es notwendig ist und im hydraulischen Bereich lediglich das Grundmaterial zu verwenden. Grundsätzlich lassen sich die beiden Teile getrennt voneinander herstellen und dann montieren. Alternativ kann das Pumpenlaufrad als Einlegeteil in einem Spritzgusswerkzeug mit dem Permanentmagnetmaterial umspritzt werden. Da in der Regel zumindest ein Lager benötigt wird, presst man dieses in das Pumpenlaufrad ein. Dies ist insbesondere bei kleinen Abmessungen und hohen Wechselbelastungen bezüglich Temperatur und Schwingungen problematisch. Beim Umspritzen des Permanentmagnetmaterials um das Flügelrad (2) und die Hohlwelle (3) ist eine optimale Entlüftung im Spritzgusswerkzeug oft nicht möglich. Dies führt zu Einschlüssen gasförmiger Bestandteile, die sich aus Luft und Ausgasungen aus dem Kunststoffmaterial zusammensetzt und damit zu einer mechanischen und magnetischen Schwächung des Permanentmagneten.

Die US 2007/284952 A1 offenbart ein Pumpenlaufrad bestehend aus zumindest drei unterschiedlichen Materialbereichen, wobei das Flügelrad mit einer Hohlwelle einen ersten Materialbereich definiert, ein Lagerbauteil einen zweiten Materialbereich definiert und ein Permanentmagnet einen dritten Materialbereich definiert, wobei sich das Lagerbauteil und die Hohlwelle axial teilweise überlappen.

Aus der EP 3 318 765 A1 ist ein Pumpenlaufrad bekannt, bestehend aus zumindest drei unterschiedlichen Materialbereichen, wobei das Flügelrad mit einer Hohlwelle einen ersten Materialbereich definiert, ein Lagerbauteil einen zweiten Materialbereich definiert und ein Permanentmagnet einen dritten Materialbereich definiert, wobei sich das Lagerbauteil und die Hohlwelle axial teilweise überlappen sowie ein Verfahren zur Herstellung eines Pumpenlaufrads.

Aufgabe der Erfindung ist es daher bei einem Pumpenlaufrad mit kunststoffgebundenem Permanentmagneten für einen robusten Aufbau, für eine optimale Entlüftung, eine sichere Befestigung des Lagerbauteils, einer wirtschaftlichen Fertigung und eine Möglichkeit eines axialen Längentoleranzausgleichs zu sorgen. Weiter soll eine möglichst genaue unwuchtreduzierte Verbindung zwischen dem Lagerbauteil und dem Magnetmaterial herstellbar sein.

Diese Aufgabe wird erfindungsgemäß durch die Merkmale des Vorrichtungsanspruchs 1 und des Verfahrensanspruchs 17 gelöst. Da sich das Lagerbauteil und die Hohlwelle teilweise überlappen, entsteht ein radialer Formschluss und ein Spalt, der eine ausreichende Entlüftung erlaubt (ca. 0,01 bis 0,03mm Spaltdicke), der aber klein genug ist, dass er sich durch den steigenden Spritzdruck schließt. Sobald der Spalt kleiner oder gleich 0,01 mm ist, kann keine Schmelze mehr durch den Spalt gedrückt werden. Bei einem maximalen Spritzdruck von etwa 500 bar wird der Einspritzvorgang beendet. Die Entlüftungsstelle befindet sich an einer für die Entlüftung optimalen Stelle und erlaubt eine nahezu vollständige Füllung der Kavität mit Magnetpartikel enthaltendem Kunststoffmaterial. Durch das weitgehende fehlen insbesondere großer Hohlräume und Lunker ist der Permanentmagnet sehr robust und widerstandsfähig gegen Temperaturwechsel- und Schwingungsbelastungen. Insbesondere verringert sich die Bruch- und Thermoschockempfindlichkeit. Vorteil dieser Lösung ist auch, dass alle Bauteile ihrer Funktion entsprechend mit unterschiedlichen Füllmaterialien versehen sein können. Das Flügelrad ist durch Glasfasern verstärkt, das Lagerbauteil durch Kohlefasern tribologisch optimiert und der Permanentmagnet durch Magnetpartikel magnetisierbar. Durch die Umspritzung mit Magnetmaterial kommt es zu einer form- und teilweise stoffschlüssigen Verbindung aller drei Komponenten (Flügelrad, Lagerbauteil und Permanentmagnet) zu einer untrennbaren Magnetrotor-Baugruppe. Ein Herauswandern des Lagers ist daher nicht möglich. Weiter ist vorgesehen, der axial zwischen der Hohlwelle (3) und dem Lagerbauteil (4) vorgesehene Bereich ein mit Permanentmagnetmaterial gefüllter Spalt (13) ist. Dieser dient während des Spritzvorgangs als Entlüftungskanal und im erkalteten Zustand als Formschlussbereich.

Nach der Erfindung ist vorgesehen dass axial zwischen der Hohlwelle (3) und dem Lagerbauteil (4) ein Bereich vorgesehen ist, der nicht zu dem ersten Materialbereich (Hohlwelle) und nicht zu dem zweiten Materialbereich (Lagerbauteil) gehört. Dieser Spalt ist Teil eines Entlüftungswegs und er definiert die axiale Lage eines Entlüftungsbereichs.

Weiterbildungen der Erfindung werden in den Unteransprüchen dargestellt. Das Lagerbauteil (4) und die Hohlwelle (3) bilden eine Trennfläche miteinander. Diese kann in ihrer Grundform zylindrisch oder konisch sein. Bei Verwendung einer konischen Trennfläche kann sich während des Spritzgussvorgangs ein temporärer Entlüftungsspalt öffnen, der sich durch den Spritzdruck wieder verschließt. Der temporäre Spalt ist im einfachsten Fall ein konusförmiger Ringspalt.

Die Neigung des Konus gegenüber einer Zylinderfläche beträgt vorzugsweise zwischen 0° und 15°, wobei er 5°, 10° oder 15° betragen kann (Winkel ϕ). Zusätzlich zum axialen Spalt (13) kann radial zwischen der Hohlwelle (3) und dem Lagerbauteil (4) ein mit Permanentmagnetmaterial gefüllter oder mit Permanentmagnetmaterial füllbarer Bereich (9) vorhanden sein. Dieser Bereich ist eine Fortsetzung des Entlüftungskanals, er kann ringförmig oder unterbrochen um den Umfang verteilt sein.

Die Geometrie des Lagerbauteils (4) und der Hohlwelle (3) ist so gestaltet, dass diese radial formschlüssig zueinander angeordnet sind. Dies erlaubt eine Vorzentrierung und erleichtert das Aufstecken des Lagerbauteils auf die Hohlwelle, eine sichere Handhabung und zuverlässige Einführung in ein Spritzgusswerkzeug, insbesondere bei Einsatz eines Montageroboters. Bei Verwendung einer Konusform ist die Steckverbindung noch optimaler.

Zweckmäßigerweise weist das Lagerbauteil (4) einen Außenbereich (6), einen Verbindungsbereich (7) und einen Lagerbereich (8) aufweist, wobei der Verbindungsbereich (7) gegenüber dem Außenbereich (6) zurückspringt. Weiter weist die Hohlwelle (3) an einem axial freien Ende einen durchmesserreduzierten Bereich (10) auf. Schließlich ist der Außenbereich (6) des Lagerbauteils (4) über den durchmesserreduzierten Bereich (10) unter Belassung des Spalts (13) angeordnet ist. Damit der Spalt (13) nicht auf null reduzierbar ist, sind der Endbereich der Hohlwelle (3) und der Verbindungsbereich (7) des Lagerbauteils derart aufeinander abgestimmt, dass beide Einlegeteile auf Anschlag montierbar sind und dennoch ein axialer Spalt (13) verbleibt. Während des Spritzgussprozesses kann sich der Spalt (13) durch den Spritzdruck erweitern und dadurch den Entlüftungsquerschmitt vergrößern. Bei Vorhandensein eines radialen Ringspalts zwischen dem durchmesserreduzierten Bereich (10) der Hohlwelle (3) und der Innenfläche des Außenbereichs (6) des Lagerbauteils (4) werden die Einlegeteile durch die Aufnahmedorne des Spritzgusswerkzeugs ausgerichtet und zentriert, so dass ein gleichmäßiger Ringspalt entsteht. Es ist auch möglich die den Ringspalt begrenzenden Bereiche geringfügig konusartig auszubilden. Der Spritzdruck bewirkt bei dieser Ausführung in der ersten Hälfte der Kavitätsfüllung durch axiale Positionierung der Einlegeteile eine Querschnittsvergrößerung des Radialspalts. In der zweiten Hälfte der Kavitätsfüllung wird der Radialspalt durch den steigenden Kavitätsinnendruck zunehmend reduziert.

Prinzipiell kann auch das Lagerteil radial innerhalb eines Hohlwellenbereichs unter Belassung eines Spalts (13) angeordnet sein.

Um eine Mehrzahl unterbrochener Entlüftungsbereiche radial zwischen dem Lagerbauteil (4) und der Hohlwelle (3) zu erhalten, kann der Außenumfang des durchmesserreduzierten Bereichs (10) eine von einer Zylindermantelfläche oder Kegelmantelfläche abweichende Form aufweisen. Ähnlich würde sich eine entsprechende Abweichung des Außenbereichs (6) des Lagerteils (4) auswirken.

Im Verbindungsbereich (7), ist eine Mehrzahl axialer Durchbrüche (11) vorgesehen. Diese dienen zum einen der Entlüftung beim Spritzgussprozess und zum anderen als Schwingungsentkopplungsmittel im Betrieb der Pumpe, da die Durchbrüche (11) die radiale Steifigkeit des Lagerbauteils (4) verringern.

Damit der innig mit dem Flügelrad (2) mit Hohlwelle (3) einerseits und dem Lagerbauteil (4) andererseits verbundene Permanentmagnet (5), keine Risse aufgrund von unterschiedlichen Wärmeausdehnungskoeffizienten kommen kann, ist vorgesehen, für alle drei Materialbereiche das gleiche Grundmaterial zu verwenden, insbesondere PPS, wobei das Grundmaterial des Flügelrads (2) mit Glasfasern, das Grundmaterial des Permanentmagneten (5) mit Magnetpartikeln und das Grundmaterial des Lagerbauteils mit Kohlefasern gefüllt ist. Vorzugsweise bestehen das Flügelrad (2) aus PPS GF40, der Permanentmagnet (5) aus PPS mit 60 Vol.-% SrFeO und das Lagerbauteil (4) aus PPS CF30.

Es hat sich gezeigt, dass die Lage des Spalts für eine optimale Entlüftung beim Spritzgießen entscheidend ist, deshalb wird vorgeschlagen, dass der mit Magnetmaterial gefüllte Spalt (13) an einen mittleren Bereich zwischen den axialen Enden des Permanentmagneten (5) an diesen anschließt.

Vorzugsweise ist vorgesehen, dass der Spalt (13) etwa um ein Drittel der Länge des Permanentmagneten (5) von dem zum Flügelrad distalen Ende axial entfernt angeordnet ist.

Der Außenbereich (6) des Lagerbauteils (4) ist mit einer radial vorspringenden Rippe (12) versehen. Diese bewirkt eine Formschlüssige Verbindung mit dem Magnetmaterial. Die Rippe (12) kann mittig, außermittig oder an den Enden des Außenbereichs angeordnet sein. Auch mehrere Rippen oder anders geformte Vorsprünge sind verwendbar. Das gleiche gilt für die Verwendung einer Nut oder von Rücksprüngen im Außenbereich (6) des Lagerbauteils (4). Bei Verwendung von Rippen oder Nuten können diese eine Unterbrechung aufweisen. Hierdurch ist auch in Drehrichtung ein Formschluss gegeben, so dass ein Verdrehen der Teile zueinander unterbunden ist. Ein gleichwirkender Formschluss kann auch durch eine zinnenartige Ausbildung von Rändern des Außenbereichs (6) hergestellt werden. Es genügt auch ein einziger Vorsprung oder Rücksprung. Am einfachsten ist jedoch eine etwa mittig angeordnete Rippe herstellbar, weil diese auch als vergrößerter Formtrenngrat ausgebildet werden kann.

Das Lagerbauteil (4) ist im beschriebenen Beispiel als Radiallager ausgebildet. Es ist jedoch denkbar das gleiche Verfahren auch bei Axiallagern anzuwenden.

Die Erfindung wird auch durch die Merkmale des Verfahrensanspruchs 2. 17 gelöst.

Das Verfahren weist folgende Schritte auf: a) Bereitstellen eines vorgeformten Flügelrads (2) mit Hohlwelle (3); b) Bereitstellen einer vorgeformten Lagerbauteils (4); c) Einlegen des Flügelrads (2) mit Hohlwelle (3) und des Lagerbauteils (4) in ein Spritzgusswerkzeug; d) Schließen des Spritzgusswerkzeugs und Einspritzen einer mit Permanentmagnetpartikeln gefüllten Kunststoffs, wobei eine Entlüftung über einen axial zwischen der Hohlwelle (3) und dem Lagerbauteil (4) vorhandenen Spalt (13) erfolgt; d) Öffnen des Spritzgusswerkzeugs und Entnahme des Pumpenlaufrads (1). Die Erfindung ist insbesondere gekennzeichnet durch die Verwendung zweier Einlegeteile, zum einen das Flügelrad (2), das vorzugsweise mit einer Hohlwelle (3) einstückig ist und zum anderen das Lagerbauteil (4). Diese beiden Einlegeteile werden miteinander und mit einem im Spritzgusswerkzeug herzustellenden Permanentmagneten form- und/oder kraftschlüssig verbunden. Das kunststoffgebundene Magnetmaterial wird dabei von der zum Flügelrad (2) distalen Ende über mehrere Einspritzkanäle eingespritzt. Die Entlüftung erfolgt über den axialen Spalt (13), einem temporären im Wesentlichen radialen Ringspalt zwischen der Hohlwelle (3) und dem Lagerbauteil (4) (Entlüftungsbereich 9) die Durchbrüche (11) im Lagerbauteil (4) und einem zentralen Entlüftungsweg des Spritzgusswerkzeugs.

Das Spritzgusswerkzeug enthält Magnete, die eine Vormagnetisierung oder eine vollständige Magnetisierung des Permanentmagnetmaterials bewirkt. Hierdurch wird der Strömungsweg des Magnetmaterials derart beeinflusst, dass es sich zunächst an der Peripherie der Kavität entlang bewegt und an deren Ende die Richtung wechselt. Dabei kommt es bei herkömmlichen Verfahren regelmäßig zu Lufteinschlüssen. Hier jedoch kann die Luft über den Spalt (13) zwischen der Hohlwelle (3) und dem Lagerbauteil (4) entweichen. Überraschenderweise hat sich gezeigt, dass die Lage des Spalts in einem mittleren Bereich eine optimale Entlüftung bewirkt.

Ausführungsbeispiele de Erfindung werden nachfolgend anhand der Zeichnung näher erläutert. Es zeigen:
Fig. 1 eine Schnittansicht eines Pumpenlaufrads,
Fig. 2 eine Schnitt- und Vorderansicht eines Lagerbauteils und
Fig. 3 eine Schnittansicht durch ein Spritzgusswerkzeug mit Einlegeteilen und eingespritztem kunststoffgebundenem Permanentmagnetmaterial.

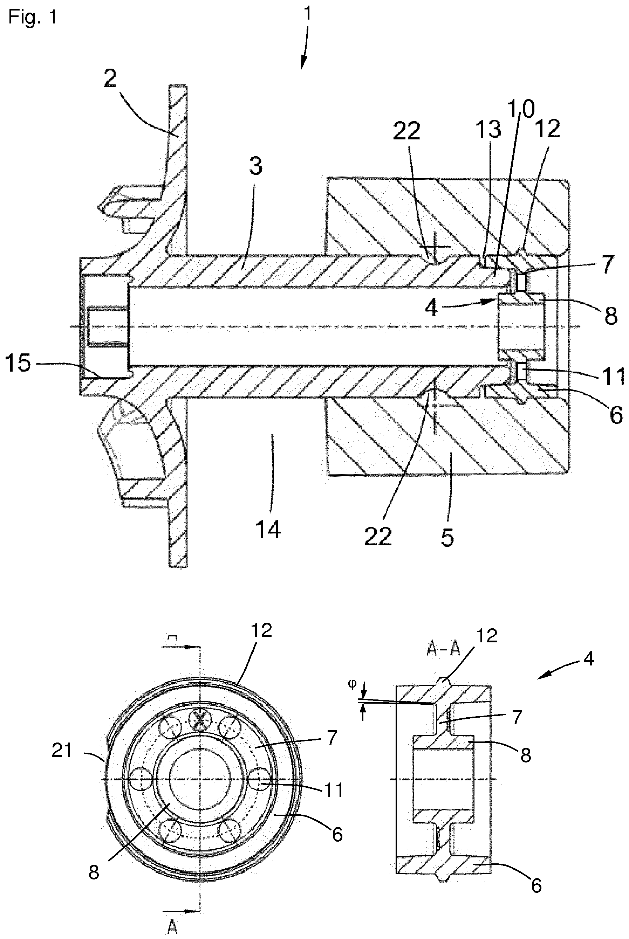

Fig. 1 zeigt eine Schnittansicht eines Pumpenlaufrads 1, mit einem Flügelrad 2, welches mit einer Hohlwelle 3 einstückig ist, einem Lagerbauteil 4 und einem Permanentmagneten 5. Axial zwischen der Hohlwelle 3 und dem Lagerbauteil 4 ist ein Spalt 13 angeordnet, der nutartig ausgebildet ist und dessen Nutgrund von der Hohlwelle 3 gebildet ist. Die Seitenflächen der Nut werden einerseits von der Hohlwelle 3 und andererseits vom Lagerbauteil 4 gebildet. Der Spalt 13 ist mit Magnetmaterial des Permanentmagneten 5 gefüllt. Zwischen dem Permanentmagneten 5 und dem Laufrad 2 besteht ein Freiraum 14. Dieser dient zur Einsparung von Magnetmaterial und zur Verringerung des Trägheitsmoments. Das Lagerbauteil 4 besteht aus einem Außenbereich 6, einem Lagerbereich 8 und einem Verbindungsbereich 7. Der Außenbereich 6 und der Lagerbereich ist rohrförmig und der Verbindungsbereich 7 scheibenförmig ausgebildet. Der Verbindungsbereich weist mehrere Durchbrüche 11 auf, die gleichmäßig über 360° verteilt sind. Radial zwischen der Hohlwelle 3 und dem Außenbereich 6 des Lagerbauteils 4 ist ein mit Magnetmaterial füllbarer Bereich 9 vorhanden. Je nach Menge des eingespritzten Magnetmaterials kann der Bereich 9 gefüllt sein, teilgefüllt sein oder nicht gefüllt sein. Am Außenbereich 6 des Lagerbauteils 4 befindet sich mittig eine Rippe 12, die nicht vollständig um den Außenbereich umläuft, sondern eine Unterbrechung aufweist, die als Verdrehsicherung dient. Das Pumpenlaufrad 1 weist eine Aufnahme 15 für ein weiteres Gleitlager auf (nicht dargestellt). Zum Pumpenlaufrad 1 gehört eine Deckscheibe (nicht dargestellt), die auf das Flügelrad 2 montierbar ist. Die Hohlwelle 3 weist innerhalb des Permanentmagneten Vertiefungen 22 auf, welche mit Permanentmagnetmaterial gefüllt sind. Diese Vertiefungen 22 sind nur partiell vorhanden, so dass sie als Verdrehsicherung, sowie auch als Axialsicherung dienen.

Fig. 2 zeigt eine Schnitt- und Vorderansicht eines Lagerbauteils 4, mit dem Außenbereich 6, dem Verbindungsbereich 7, Lagerbereich 8, den Durchbrüchen 11, der Rippe 12 und einer Unterbrechung 21 der Rippe 12. Die Unterbrechung 21 dient als Verdrehsicherung. Der Außenbereich 6 ist innen konisch mit einem Winkel ϕ von ca. 10°.

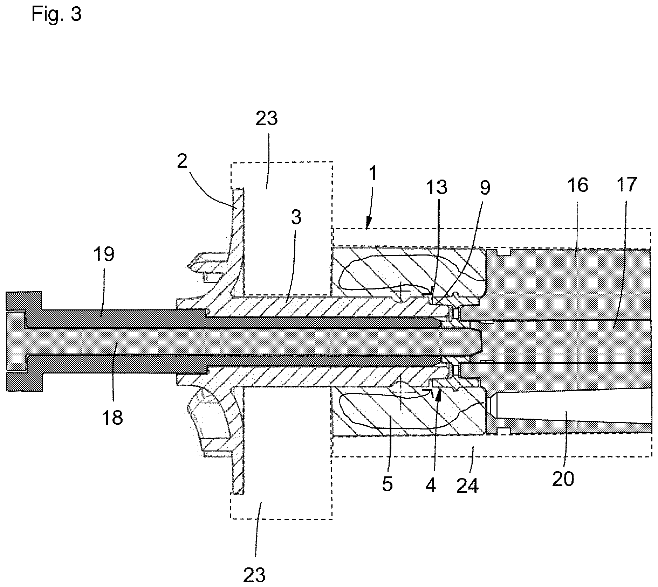

Fig. 3 zeigt eine Schnittansicht durch ein Spritzgusswerkzeug mit Einlegeteilen und eingespritztem kunststoffgebundenem Permanentmagnetmaterial. Der Einfachheit halber ist vom Spritzgusswerkzeug nur ein Angusseinsatz 16 mit Angusskanälen 20, ein düsenseitiger Werkzeugkern 17, ein auswerferseitiger Werkzeugkern 18 und ein Auswerfer 19 dargestellt. Seitliche Schieber 23 und ein weiteres Formteil 24 sind gestrichelt angedeutet. Im Spritzgusswerkzeug wird das Flügelrad 2 auf den Auswerfer 19 und das Lagerbauteil 4 auf den auswerferseitigen Werkzeugkern 18 aufgenommen. Beim Einlegen in das Spritzgusswerkezeug sind das Flügelrad 2 und das Lagerbauteil 4 bereits vormontiert. Die Vormontage und das Einlegen erfolgt durch einen Montageroboter. Beim Spritzgießvorgang wird das Werkzeug geschlossen, dabei liegt der düsenseitige Werkzeugkern am auswerferseitigen Düsenkern zentriert an. Ein Angusseinsatz schließt die Kavität axial ab. Über drei Angusskanäle wird gleichzeitig mit Magnetpartikeln gefülltes Kunststoffmaterial eingespritzt. Ein Magnetfeld im Spritzgusswerkzeug beeinflusst die Spritzgussmasse derart, dass sie sich zunächst an der radial äußeren Wandung des Werkzeugs entlang bewegt bis ein axiales Ende der Werkzeugkavität erreicht ist. Dann wird die Masse nach innen gedrängt und axial zurück in Richtung Anguss. Dabei schiebt die Spritzgussmasse die in der Kavität vorhandene Luft durch den Spalt 13 und den Entlüftungsbereich 9, sowie den Durchbrüchen 11 und Freisparungen zwischen dem düsenseitigen Werkzeugkern 17 und dem Angusseinsatz 16 nach außen. Die Lage des Spalts 13 bewirkt, dass nur minimale oder keine Hohlräume verbleiben, weil die

Luft entweichen kann bevor sich die Front der Spritzgussmasse mit dem aus den Angusskanälen nachströmenden Material vereinigen kann.

### Bezugszeichenliste

- 1: Pumpenlaufrad
- 2: Flügelrad
- 3: Hohlwelle
- 4: Lagerbauteil
- 5: Permanentmagnet
- 6: Außenbereich
- 7: Verbindungsbereich
- 8: Lagerbereich
- 9: Entlüftungsbereich
- 10: durchmesserreduzierter Bereich
- 11: Durchbruch
- 12: Rippe
- 13: Spalt
- 14: Freiraum
- 15: Aufnahme
- 16: Angusseinsatz
- 17: düsenseitiger Werkzeugkern
- 18: auswerferseitiger Werkzeugkern
- 19: Auswerfer
- 20: Angusskanal
- 21: Unterbrechung
- 22: Vertiefung
- 23: Schieber
- 24: Formteil

## Patentansprüche

1. Pumpenlaufrad (1), bestehend aus zumindest drei unterschiedlichen Materialbereichen, wobei ein Flügelrad (2) mit einer Hohlwelle (3) einen ersten Materialbereich definiert, ein Lagerbauteil (4) einen zweiten Materialbereich definiert und ein Permanentmagnet (5) einen dritten Materialbereich definiert,
wobei sich das Lagerbauteil (4) und die Hohlwelle (3) axial teilweise überlappen, und wobei axial zwischen der Hohlwelle (3) und dem Lagerbauteil (4) ein Bereich vorgesehen ist, der nicht zu dem ersten Materialbereich und nicht zu dem zweiten Materialbereich gehört,
**dadurch gekennzeichnet, dass** der axial zwischen der Hohlwelle (3) und dem Lagerbauteil (4) vorgesehene Bereich ein mit Permanentmagnetmaterial gefüllter Spalt (13) ist.

2. Pumpenlaufrad nach Anspruch 1, **dadurch gekennzeichnet, dass** das Lagerbauteil (4) und die Hohlwelle (3) eine Trennfläche miteinander bilden.

3. Pumpenlaufrad nach Anspruch 2, **dadurch gekennzeichnet, dass** die Trennfläche in ihrer Grundform zylindrisch oder konisch ist.

4. Pumpenlaufrad nach Anspruch 3, 4- **dadurch gekennzeichnet, dass** der Konus gegenüber eine Zylinderfläche um 0° bis 15° geneigt ist 2. .

5. Pumpenlaufrad nach zumindest einem der vorangehenden Ansprüche, **dadurch gekennzeichnet, dass** radial zwischen der Hohlwelle (3) und dem Lagerbauteil (4) ein mit Permanentmagnetmaterial gefüllter oder mit Permanentmagnetmaterial füllbarer Bereich (9) vorhanden ist.

6. Pumpenlaufrad nach zumindest einem der vorangehenden Ansprüche, **dadurch gekennzeichnet, dass** das Lagerbauteil (4) und die Hohlwelle (3) radial formschlüssig zueinander angeordnet sind.

7. Pumpenlaufrad nach zumindest einem der vorangehenden Ansprüche, **dadurch gekennzeichnet, dass** das Lagerbauteil (4) einen Außenbereich (6), einen Verbindungsbereich (7) und einen Lagerbereich (8) aufweist, wobei der Verbindungsbereich (7) gegenüber dem Außenbereich (6) zurückspringt.

8. Pumpenlaufrad nach zumindest einem der vorangehenden Ansprüche, **dadurch gekennzeichnet, dass** die Hohlwelle (3) an einem axial freien Ende einen durchmesserreduzierten Bereich (10) aufweist.

9. Pumpenlaufrad nach Anspruch 7 und 8, **dadurch gekennzeichnet, dass** der Außenbereich (6) des Lagerbauteils (4) über den durchmesserreduzierten Bereich (10) unter Belassung des Spalts (13) angeordnet ist.

10. Pumpenlaufrad nach Anspruch 8 oder 9, **dadurch gekennzeichnet, dass** der Außenumfang des durchmesserreduzierten Bereichs (10) eine von einer Zylindermantelfläche abweichende Form aufweist.

11. Pumpenlaufrad nach zumindest einem der Ansprüche 7 bis 10, **dadurch gekennzeichnet, dass** der Verbindungsbereich (7) axiale Durchbrüche (11) aufweist.

12. Pumpenlaufrad nach zumindest einem der vorangehenden Ansprüche, **dadurch gekennzeichnet, dass** der Permanentmagnet (5), das Flügelrad (2) mit Hohlwelle (3) und das Lagerbauteil (4) aus dem gleichen Grundmaterial bestehen, wobei das Grundmaterial des Permanentmagneten (5) mit Magnetpartikeln gefüllt ist und das Grundmaterial des Lagerbauteils mit Kohlefasern gefüllt ist.

13. Pumpenlaufrad nach Anspruch 1, **dadurch gekennzeichnet, dass** der mit Magnetmaterial gefüllte Spalt (13) an einen mittleren Bereich zwischen den axialen Enden des Permanentmagneten (5) an diesen anschließt.

14. Pumpenlaufrad nach Anspruch 13, **dadurch gekennzeichnet, dass** der Spalt (13) etwa um ein Drittel der Länge des Permanentmagneten (5) von dem zum Flügelrad distalen Ende axial entfernt angeordnet ist.

15. Pumpenlaufrad nach zumindest einem der Ansprüche 2. 7 bis 14, **dadurch gekennzeichnet, dass** der Außenbereich (6) des Lagerbauteils (4) eine radial vorspringende Rippe (12) aufweist.

16. Pumpenlaufrad nach zumindest einem der vorangehenden Ansprüche, **dadurch gekennzeichnet, dass** das Lagerbauteil (4) ein Radiallager ist.

17. Verfahren zur Herstellung eines Pumpenlaufrads (1)), bestehend aus zumindest drei unterschiedlichen Materialbereichen, wobei ein Flügelrad (2) mit einer Hohlwelle (3) einen ersten Materialbereich definiert, ein Lagerbauteil (4) einen zweiten Materialbereich definiert und ein Permanentmagnet (5) einen dritten Materialbereich definiert, wobei das Verfahren die folgenden Verfahrensschritte umfasst: a) Bereitstellen eines vorgeformten Flügelrads (2) mit Hohlwelle (3); b) Bereitstellen einer vorgeformten Lagerbauteils (4); c) Einlegen des Flügelrads (2) mit Hohlwelle (3) und des Lagerbauteils (4) in ein Spritzgusswerkzeug; d) Schließen des Spritzgusswerkzeugs und Einspritzen einer mit Permanentmagnetpartikeln gefüllten Kunststoffs, wobei eine Entlüftung über einen axial zwischen der Hohlwelle (3) und dem Lagerbauteil (4) vorhandenen Spalt (13) erfolgt; d) Öffnen des Spritzgusswerkzeugs und Entnahme des Pumpenlaufrads (1).

18. Verfahren nach Anspruch 17, **dadurch gekennzeichnet, dass** das Spritzgusswerkzeug einen Magneten aufweist durch welchen die Kunststoffgebundenen Magnetpartikel ausgerichtet und magnetisiert werden.

19. Pumpe mit einem Pumpenlaufrad nach Anspruch 1 bis 16.

## Claims

1. A pump impeller (1), consisting of at least three different regions of material, wherein an impeller (2) with a hollow shaft (3) defines a first region of material, a bearing component (4) defines a second region of material and a permanent magnet (5) defines a third region of material, wherein the bearing component (4) and the hollow shaft (3) axially partially overlap, and wherein a region is provided axially between the hollow shaft (3) and the bearing component (4) which does not belong to the first region of material and not to the second region of material,
**characterised in that** the region provided axially between the hollow shaft (3) and the bearing component (4) is a gap (13) filled with permanently magnetic material.

2. A pump impeller according to claim 1, **characterised in that** the bearing component (4) and the hollow shaft (3) form a parting surface with each other.

3. A pump impeller according to claim 2, **characterised in that** the parting surface is cylindrical or conical in its basic form.

4. A pump impeller according to claim 3, **characterised in that** the cone is inclined by 0° to 15° relative to a cylinder surface.

5. A pump impeller according to at least one of the preceding claims, **characterised in that** a region (9) which is filled with permanently magnetic material or can be filled with permanently magnetic material is present radially between the hollow shaft (3) and the bearing component (4).

6. A pump impeller according to at least one of the preceding claims, **characterised in that** the bearing component (4) and the hollow shaft (3) are arranged radially in a form-fit in relation to each other.

7. A pump impeller according to at least one of the preceding claims, **characterised in that** the bearing component (4) has an outer region (6), a connection region (7) and a bearing region (8), the connection region (7) being set back relative to the outer region (6).

8. A pump impeller according to at least one of the preceding claims, **characterised in that** the hollow shaft (3) has a region (10) of reduced diameter at one axially free end.

9. A pump impeller according to claim 7 and 8, **characterised in that** the outer region (6) of the bearing component (4) is arranged over the region (10) of reduced diameter, leaving the gap (13).

10. A pump impeller according to claim 8 or 9, **characterised in that** the outer periphery of the region (10) of reduced diameter has a form which deviates from a lateral cylinder surface.

11. A pump impeller according to at least one of claims 7 to 10, **characterised in that** the connection region (7) has axial openings (11).

12. A pump impeller according to at least one of the preceding claims, **characterised in that** the permanent magnet (5), the impeller (2) with hollow shaft (3) and the bearing component (4) consist of the same base material, with the base material of the permanent magnet (5) being filled with magnetic particles and the base material of the bearing component being filled with carbon fibres.

13. A pump impeller according to claim 1, **characterised in that** the gap (13) filled with magnetic material adjoins the permanent magnet (5) at a middle region between the axial ends thereof.

14. A pump impeller according to claim 13, **characterised in that** the gap (13) is arranged axially distant by approximately one-third of the length of the permanent magnet (5) from the end which is distal to the impeller.

15. A pump impeller according to at least one of claims 7 to 14, **characterised in that** the outer region (6) of the bearing component (4) has a radially projecting rib (12).

16. A pump impeller according to at least one of the preceding claims, **characterised in that** the bearing component (4) is a radial bearing.

17. A method for producing a pump impeller (1), consisting of at least three different regions of material, wherein an impeller (2) with a hollow shaft (3) defines a first region of material, a bearing component (4) defines a second region of material and a permanent magnet (5) defines a third region of material, wherein the method comprises the following method steps:
a) providing a pre-formed impeller (2) with a hollow shaft (3); b) providing a pre-formed bearing component (4); c) placing the impeller (2) with hollow shaft (3) and the bearing component (4) in an injection mould; d) closing the injection mould and injecting a plastics material filled with permanently magnetic particles, with venting taking place by way of a gap (13) axially present between the hollow shaft (3) and the bearing component (4); d) opening the injection mould and removing the pump impeller (1).

18. A method according to claim 17, **characterised in that** the injection mould has a magnet by which the plastics-bound magnetic particles are oriented and magnetised.

19. A pump with a pump impeller according to claims 1 to 16.

## Revendications

1. Roue mobile de pompe (1), consistant en moins trois zones de matériau différentes, où un rotor (2) avec un arbre creux (3) définit une première zone de matériau, un élément formant palier (4) définit une seconde zone de matériau et un aimant permanent (5) définit une troisième zone de matériau, où l'élément formant palier (4) et l'arbre creux (3) se chevauchent partiellement axialement, et où une zone, qui n'appartient pas à la première zone de matériau et à la seconde zone de matériau, est prévue axialement entre l'arbre creux (3) et l'élément formant palier (4), **caractérisée en ce que** la zone prévue axialement entre l'arbre creux (3) et l'élément formant palier (4) est un espace (13) rempli de matériau d'aimant permanent.

2. Roue mobile de pompe selon la revendication 1, **caractérisée en ce que** l'élément formant palier (4) et l'arbre creux (3) forment une surface de séparation l'un avec l'autre.

3. Roue mobile de pompe selon la revendication 2, **caractérisée en ce que** la surface de séparation est cylindrique ou conique dans sa forme de base.

4. Roue mobile de pompe selon la revendication 3, **caractérisée en ce que** le cône est incliné de 0° à 15° par rapport à une surface de cylindre.

5. Roue mobile de pompe selon au moins l'une des revendications précédentes, **caractérisée en ce que**, radialement entre l'arbre creux (3) et l'élément formant palier (4), une zone (9) remplie de matériau d'aimant permanent ou qui peut être remplie de matériau d'aimant permanent est présente.

6. Roue mobile de pompe selon au moins l'une des revendications précédentes, **caractérisée en ce que** l'élément formant palier (4) et l'arbre creux (3) sont disposés radialement à engagement positif l'un par rapport à l'autre.

7. Roue mobile de pompe selon au moins l'une des revendications précédentes, **caractérisée en ce que** l'élément formant palier (4) présente une zone externe (6), une zone de liaison (7) et une zone de palier (8), où la zone de liaison (7) est en retrait par rapport à la zone externe (6).

8. Roue mobile de pompe selon au moins l'une des revendications précédentes, **caractérisée en ce que** l'arbre creux (3) présente une zone de diamètre réduit (10) à une extrémité libre axialement.

9. Roue mobile de pompe selon les revendications 7 et 8, **caractérisée en ce que** la zone externe (6) de l'élément formant palier (4) est disposée au-dessus de la zone de diamètre réduit (10) en laissant l'espace (13).

10. Roue mobile de pompe selon la revendication 8 ou 9, **caractérisée en ce que** la circonférence externe de la zone de diamètre réduit (10) présente une forme s'écartant d'une surface d'enveloppe de cylindre.

11. Roue mobile de pompe selon au moins l'une des revendications 7 à 10, **caractérisée en ce que** la zone de liaison (7) présente des ouvertures axiales (11).

12. Roue mobile de pompe selon au moins l'une des revendications précédentes, **caractérisée en ce que** l'aimant permanent (5), le rotor (2) avec l'arbre creux (3) et l'élément formant palier (4) consistent en le même matériau de base, où le matériau de base de l'aimant permanent (5) est rempli de particules d'aimant et le matériau de base de l'élément formant palier est rempli de fibres de carbone.

13. Roue mobile de pompe selon la revendication 1, **caractérisée en ce que** l'espace (13) rempli de matériau d'aimant jouxte l'aimant permanent (5) au niveau d'une zone moyenne entre les extrémités axiales de celui-ci.

14. Roue mobile de pompe selon la revendication 13, **caractérisée en ce que** l'espace (13) est disposé en étant éloigné axialement de l'extrémité distale par rapport au rotor d'environ un tiers de la longueur de l'aimant permanent (5).

15. Roue mobile de pompe selon au moins l'une des revendications 7 à 14, **caractérisée en ce que** la zone externe (6) de l'élément formant palier (4) présente une nervure (12) faisant saillie radialement.

16. Roue mobile de pompe selon au moins l'une des revendications précédentes, **caractérisée en ce que** l'élément formant palier (4) est un palier radial.

17. Procédé de fabrication d'une roue mobile de pompe (1), consistant en au moins trois zones de matériau différentes, où un rotor (2) avec un arbre creux (3) définit une première zone de matériau, un élément formant palier (4) définit une seconde zone de matériau et un aimant permanent (5) définit une troisième zone de matériau, où le procédé comprend les étapes de procédé suivantes :
a) fourniture d'un rotor (2) préformé avec un arbre creux (3) ; b) fourniture d'un élément formant palier (4) préformé ; c) insertion du rotor (2) avec l'arbre creux (3) et l'élément formant palier (4) dans un outil de moulage par injection ; d) fermeture de l'outil de moulage par injection et injection d'une matière plastique remplie de particules d'aimant permanent, où une désaération a lieu via un espace (13) présent axialement entre l'arbre creux (3) et l'élément formant palier (4) ; d) ouverture de l'outil de moulage par injection et retrait de la roue mobile de pompe (1).

18. Procédé selon la revendication 17, **caractérisé en ce que** l'outil de moulage par injection présente un aimant par lequel les particules d'aimant liées avec la matière plastique sont orientées et magnétisées.

19. Pompe avec une roue mobile de pompe selon les revendications 1 à 16.
